# EUROPEAN PATENT SPECIFICATION

(11) **EP 3 694 938 B1**
(45) Date of publication and mention of the grant of the patent: **08.12.2021**
(21) Application number: 18799838.0
(22) Date of filing: 09.10.2018
(51) Int. Cl.: C09D 109/02, C08L 9/02, B29D 30/72, B60C 1/00, B60C 13/00, C09D 127/06, B60C 13/04

(54) **TIRE FOR VEHICLE WHEELS**
REIFEN FÜR FAHRZEUGRÄDER
PNEU DESTINÉ À DES ROUES DE VÉHICULE

(30) Priority: 13.10.2017 IT 201700115947
(43) Date of publication of application: 19.08.2020
(73) Proprietor: Pirelli Tyre S.p.A., 20126 Milano (IT)
(72) Inventor: ROMANI, Francesco, I-20126 Milano (IT)
(74) Representative: PGA S.p.A.
(86) International application number: PCT/IB2018/057810
(87) International publication number: WO 2019/073378

(56) References cited:
- EP-A1- 2 785 770
- JP-A- H08 104 852
- JP-A- 2002 036 828
- US-A- 5 314 741
- US-A1- 2011 079 332
- US-A1- 2017 246 918

## Description

### FIELD OF THE INVENTION

The present invention relates to a tire for vehicle wheels having a protective coating layer, optionally white or colored.

More particularly, the present invention relates to a tire for vehicle wheels comprising at least one sidewall, at least partially coated with at least one protective coating layer, optionally white or colored.

### PRIOR ART

Tires for vehicle wheels having a white or colored outer surface layer are known in the art.

Typically, the colored outer surface is formed on at least one of the sidewalls of the tire. The sidewall of the tire may have colored decorative elements applied until it is completely covered by a differently colored layer.

Typically, such a layer may be made by applying a layer of vulcanizable polymeric material to one sidewall of the green tire, comprising colored or white pigments and subsequent co-vulcanization during the process of making the finished tire.

Tires with a colored outer surface made with this method are described, for example, in US5474645, US 2007/256771, US 2004/103974, US 2016/032151, EP2522496, and EP0249918 which describe a tire comprising a vulcanized rubber surface coated with a colored coating with an elastomeric base.

Similarly, US patents 3,648,748 and US 4,131,149 and the published patent applications US 2004/0055680 and US 2004/0050471 describe a tire comprising a vulcanized rubber surface coated with a colored coating based on polyurethane.

Alternatively, the colored outer surface is made by applying to one side of the vulcanized tire a paint or layer of adhesive crosslinkable polymeric material comprising colored or white pigments, and subsequently activating the crosslinking.

Tires with a colored outer surface made with this construction method are described, for example in US5300164, US6030676, US6080465, US8834974

In some cases, as for example in GB945978, EP2522496 A2, EP249918 A2, WO2013/093896, US5474645 and US5591513, the use of a barrier layer interposed between the outer surface of the tire and the colored coating has been suggested, this barrier layer generally comprising halogenated rubbers, such as polychloroprene and chlorobutyl rubbers.

### SUMMARY OF THE INVENTION

According to the Applicant, the colored compositions described above may have some drawbacks.

For example, the Applicant has noted that the colored compositions may have discoloration problems due to the migration of staining agents to the visible surface, typically represented by antioxidants, antiozonants and waxes usually present in the elastomeric compositions, in particular those used in the manufacture of tires, even in the presence of barrier layers that cannot prevent the above migration.

Moreover, difficulties have been encountered in obtaining a good adhesion between the colored compositions and the surface of the vulcanized tire to be coated, both in the case of co-vulcanization, due to the different polymeric composition, in particular with the use of barrier layers comprising halogenated rubbers, and in the case of crosslinking, due to the lower bonding strength.

Finally, the colored compositions have proved to be sensitive to the action of prolonged static and dynamic stresses in the presence of ozone, with the formation of more or less marked cracks.

The Applicant has now found that it is possible to overcome the aforementioned drawbacks by providing a surface coating layer, optionally white or colored, with a protective elastomeric composition comprising from 55 to 95 phr, preferably from 60 to 90 phr, of a mixture of a nitrile rubber and a vinyl chloride polymer, from 45 to 5 phr, preferably from 40 to 10 phr, of at least one diene and/or alpha-olefin elastomeric polymer, from 5 to 80 phr of at least one reinforcing filler, and optionally, from 0.1 to 10 phr of at least one coloring agent.

The term "elastomeric protective composition" means an elastomeric composition which prevents the migration of staining agents present in the elastomeric compositions used in the manufacture of tires, typically represented by antioxidants, antiozonants and waxes.

The reinforcing filler may be a dark reinforcing filler, such as carbon black, if the function of the coating layer is protective barrier and colored label support, or it may be a white reinforcing filler, such as for example, silica or titanium dioxide, if the function of the coating layer is also to provide a white and/or colored coating.

Said elastomeric protective composition allows a coating layer to be formed, possibly white or colored flexible and capable of strongly adhering to the surface of the tire.

Advantageously, the rubbery behavior of said coating layer allows withstanding the deformations experienced after manufacture of the tire and, in particular, at the time of inflation thereof and subsequent use thereof under a vehicle.

Advantageously, said coating layer does not exhibit substantial problems of discoloration and/or stain formation due to the migration of staining agents present in the tire compound.

Said coating layer does not cause the formation of substantial defects during the application of said protective elastomeric composition on the surface of the tire, nor does it show substantial aging phenomena (i.e. cracking, discoloration or other surface defects) due to exposure to air, ozone and/or high temperatures.

According to a first aspect, the present invention relates to a tire comprising:
- a carcass structure comprising at least a carcass ply having opposite lateral edges associated to respective bead structure;
- a tread band applied in a radially outer position to said carcass structure; and
- a pair of sidewalls laterally applied on opposite sides with respect to said carcass structure,
wherein at least one of said sidewalls is at least partially coated with at least one coating layer, possibly white or colored, obtained by cross-linking of a protective elastomeric composition, comprising:
- from 55 to 95 phr, preferably from 60 to 90 phr, of a mixture of a nitrile rubber and a vinyl chloride polymer,
- from 45 to 5 phr, preferably from 40 to 10 phr, of at least a diene and/or alpha-olefin elastomeric polymer,
- from 5 to 80 phr of at least one reinforcing filler, and
- optionally, from 0.1 to 10 phr of at least one coloring agent.

According to a further aspect, the present invention relates to a protective elastomeric composition comprising:
- from 55 to 95 phr, preferably from 60 to 90 phr, of a mixture of a nitrile rubber and a vinyl chloride polymer,
- from 45 to 5 phr, preferably from 40 to 10 phr, of at least a diene and/or alpha-olefin elastomeric polymer,
- from 5 to 80 phr of at least one reinforcing filler, and
- optionally, from 0.1 to 10 phr of at least one coloring agent.

### DETAILED DESCRIPTION OF THE INVENTION

For the purposes of the present description and of the following claims, unless indicated otherwise, all the numbers expressing quantities, values, percentages and so on must be interpreted as modified in all cases by the term "about". Furthermore, all ranges include any combination of the maximum and minimum points described and include any intermediate interval, which may or may not have been specifically listed herein.

By the expression "rubber", "elastomeric polymer" or "elastomer" it is meant a natural or synthetic polymer which, after vulcanization, at room temperature can be stretched repeatedly to at least twice its original length and which, after removal of the tensile load immediately returns with force to approximately its original length (definition according to ASTM, committee E8, Philadelphia 1976).

The amounts of the various components of an elastomeric composition are generally provided in phr, where the term phr means component parts per every hundred rubber parts minus any extension oils. The protective elastomeric compositions according to the present invention are meant to consist of 100 phr of said mixture of nitrile rubber and vinyl chloride polymer and said at least one diene and/or alpha-olefin elastomeric polymer, net of any extension oils.

According to a preferred embodiment, said mixture of nitrile rubber and a vinyl chloride polymer comprises from 50 to 80 parts by weight of nitrile rubber and from 20 to 50 parts by weight of vinyl chloride polymer with respect to 100 total parts by weight of nitrile rubber and vinyl chloride polymer.

According to a preferred embodiment, said nitrile rubber used in the invention is a copolymer rubber obtained from an α,β-ethylenically unsaturated nitrile monomer such as acrylonitrile and methacrylonitrile, and a diene monomer selected such as 2-methyl-1,3-butadiene, 1,3-butadiene, 1,2-butadiene and 2-chloro-1,3-butadiene.

According to a particularly preferred embodiment, said nitrile rubber used in the invention is an acrylonitrile-butadiene rubber (NBR).

Preferably, the content of α,β-ethylenically unsaturated nitrile monomer units is in the range comprised between 10% and 50% by weight with respect to the total weight of the nitrile rubber.

Optionally, at least one monomer co-polymerizable with the nitrile monomer and the diene monomer may be further co-polymerized to obtain the nitrile rubber used in the invention.

The co-polymerizable monomer comprises, for example, (i) unsaturated carboxylic acids such as acrylic acid, methacrylic acid, maleic acid, fumaric acid and itaconic acid; (ii) acrylic acid esters and methacrylic acid esters such as methyl acrylate, methyl methacrylate, ethyl acrylate, ethyl methacrylate, butyl methacrylate, 2-ethylhexylacrylate, 2-ethylhexyl methacrylate, lauryl acrylate, lauryl methacrylate, glycidyl acrylate, glycidyl methacrylate, 2-hydroxyethyl acrylate and 2-hydroxyethyl methacrylate; and (iii) acrylic acid amide, methacrylic acid amide and derivatives thereof such as acrylamide, methacrylamide, N-methylolacrylamide, N-methylolmethacrylamide, N-butoxyacrylamide and N-butymethacrylamide.

The amount of nitrile monomer in the nitrile rubber used in the invention is in the range of 10% and 50% by weight, preferably 15-40% by weight and more preferably 20-30% by weight with respect to the total weight of the nitrile rubber.

The amount of the co-polymerizable monomer, if present, is not greater than 15% by weight, preferably not greater than 10% and more preferably not greater than 5% by weight with respect to the total weight of the nitrile rubber.

The nitrile rubber preferably has a Mooney viscosity (ML1 + 4, 100°C) from 25 to 140, more preferably from 35 to 100 and even more preferably from 45 to 90.

According to a preferred embodiment, said vinyl chloride polymer comprises polyvinyl chloride and copolymers of vinyl chloride with a monomer or monomers co-polymerizable with vinyl chloride, The vinyl chloride polymer preferably has a degree of polymerization in the range between 550 and 2,500, more preferably between 600 and 2,200, and even more preferably between 650 and 2,000.

According to a particularly preferred embodiment, said vinyl chloride polymer used in the invention is polyvinylchloride (PVC).

For the mixing of nitrile rubber and vinyl chloride polymer, various methods may be employed which comprise, for example, a latex melting method in which a nitrile rubber latex is mixed with a vinyl chloride latex, and subsequent coprecipitation; and a dry melting method in which the solid nitrile rubber and the solid vinyl chloride polymer are mixed under heated conditions using a mixer such as a roller mixer or a Banbury mixer.

In the preparation of the nitrile rubber and vinyl chloride polymer mixture useful in the present invention, a plasticizer and other additional ingredients may be used.

The plasticizer employed is an ester between an alcohol having an ether bond and a dicarboxylic acid with 6-10 carbon atoms.

Specific examples of alcohols having an ether bond are, for example, butyldiethyl alcohol, propoxypropyl alcohol, ethoxybutyl alcohol, methoxypentyl alcohol, pentoxyl alcohol, butoxoxypropyl alcohol, propoxylbutyl alcohol, ethoxypentyl alcohol, methoxyxylic alcohol, pentypipropyl alcohol, butylbutyl alcohol, propoxypentyl alcohol, alcohol ethoxyxylic, methoxyphetyl alcohol, butoxyethoxyethyl alcohol, propoxypropoxyethyl alcohol, propoxyethoxypropyl alcohol, ethoxypropoxypropyl alcohol, methoxybutoxypropyl alcohol and ethoxyethoxybutyl alcohol.

Specific examples of dicarboxylic acids with 6-10 carbon atoms are, for example, adipic acid, pimelic acid, suberic acid, azelaic acid, and sebacic acid.

As specific examples of preferred plasticizers, dibuthoxyethyl adipate (commercially available as "RS-107" from Asahi Denka Kogyo KK) and di-(butoxyethoxyethyl)-adipate (commercially available as "TP-95" by Thiokol Chemical Corp.) may be mentioned.

Optional ingredients such as filler, reinforcement, process adjuvant, and anti-aging agent are not particularly limited and conventional ingredients may be used.

Examples of mixtures of nitrile rubber and vinyl chloride polymer useful in the present invention are, for example, the rubbers produced and distributed by the company Sidiac under the trade name Sivic^{®}, such as, for example, Sivic^{®}702, Sivic^{®}711, Sivic^{®}711LV, Sivic ^{®}730, and Sivic^{®}730M60, and the company Zeon under the trade name Nipol^{®}, such as, for example, Nipol^{®}1203W and Nipol^{®}DN171.

According to a preferred embodiment, said diene and/or alpha-olefin elastomeric polymer may be selected from: cis-1,4-polyisoprene (natural or synthetic rubber, preferably natural), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, ethylene/propylene (EPR) copolymers or ethylene/propylene/diene (EPDM) copolymers; polyisobutene; butyl rubbers; halobutyl rubbers, in particular chlorobutyl or bromobutyl rubbers; or mixture thereof.

According to a preferred embodiment, said reinforcing filler may be selected from those commonly used for cross-linked manufactured articles, in particular for tires, such as carbon black, silica, titanium dioxide, alumina, aluminosilicates, calcium carbonate, kaolin, talc, chalk or mixtures thereof. Carbon black, silica, titanium dioxide and mixtures thereof are particularly preferred.

White reinforcing fillers are preferred for making white and/or colored protective layers. Typically, the white reinforcing filler may be selected from: silica, alumina, titanium dioxide, aluminosilicates, bentonite, kaolin, talc, chalk or mixtures thereof. Silica and titanium dioxide are particularly preferred white reinforcing fillers.

Dark reinforcing fillers are preferred for making black protective layers, which function as a protective barrier and support for colored labels. Typically, the dark reinforcing filler is carbon black.

If the protective elastomeric composition comprises a white reinforcing filler, and optionally one or more coloring agents, the dark reinforcing fillers, such as carbon black, may be added to the white or colored protective elastomeric composition described above to impart other properties to said composition, provided that the color of the filler does not alter or change the desired color of the colored composition in a negative way. The presence of carbon black in a very low percentage, i.e. a few phr allows obtaining a color with a darker appearance, in particular with the red, blue and green pigments.

According to a preferred embodiment, said coloring agent may be selected from: iron oxide, metal powders such as aluminum or copper powder, metal pastes such as aluminum pastes, pigments comprising organic components, pigments comprising inorganic components, pigments comprising fluorescent components, pigments comprising luminescent components, pigments absorbing ultraviolet rays, pigments comprising mineral components, oxides of amorphous glass, polyacrylates, metallic flakes, reflecting pigments, or mixture thereof.

The selection of the coloring agent varies depending on the choice of color and the intensity of the color to be imparted to the surface to be coated.

Examples of coloring agents which may be used according to the present invention and which are available on the market are the Offset^{®} FM/4500 (aluminum paste) products from Schlenk, or Hostaperm Blue^{®} BT-617-D (blue pigment), Hostaperm Green GG 01 (green pigment), Hostaperm Orange GR (orange pigment), Hostaperm Red E2B 70 (red pigment), Hostaperm Yellow H3G (yellow pigment) from Clariant.

The protective elastomeric composition described above may be applied to the surface of the outer structural member of a green tire and vulcanized together with the tire, or it may be applied to the surface of the outer structural member of a finished tire, and subsequently vulcanized.

The sidewall of the tire to be coated is normally obtained by cross-linking an elastomeric composition comprising at least one crosslinkable elastomeric polymer. Preferably, said elastomeric polymer may be selected from: cis-1,4-polyisoprene (natural or synthetic rubber, preferably natural), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, ethylene/propylene (EPR) copolymers or ethylene/propylene/diene (EPDM) copolymers; polyisobutene; butyl rubbers; halobutyl rubbers, in particular chlorobutyl or bromobutyl rubbers; or mixtures thereof.

Said elastomeric composition may further comprise at least one reinforcing filler such as, for example, carbon black, silica, alumina, aluminosilicates, calcium carbonate, kaolin or mixtures thereof.

The elastomeric compositions described above (both that of the coating layer and all of those of the sidewall and of the other components of the tire) may be vulcanized according to known techniques, in particular with sulfur-based vulcanization systems, commonly used for elastomeric polymers. To this end, after one or more thermo-mechanical treatment steps, a sulfur-based vulcanizing agent is incorporated in the elastomeric composition, preferably together with vulcanization accelerants. In the final step of the treatment, the temperature is generally kept below 140°C, so as to avoid any unwanted pre-crosslinking phenomenon.

The vulcanizing agent most advantageously used is sulfur, or sulfur-containing molecules (sulfur donors), with accelerants and activators known by the man skilled in the art.

The activators that are particularly effective are zinc-based compounds, and in particular ZnO, ZnCO₃, zinc salts of saturated or unsaturated fatty acids containing from 8 to 18 carbon atoms, such as,, example, zinc stearate, which are preferably formed in situ in the elastomeric composition starting from ZnO and fatty acid, as well as BiO, PbO, Pb₃O₄, PbO₂ or mixtures thereof.

The accelerants that are commonly used may be selected from: dithiocarbamates, guanidine, thiourea, thiazoles, sulphonamides, thiurams, amines, xanthates or mixtures thereof.

The elastomeric compositions used may include other additives commonly selected on the basis of the specific application for which each composition is intended. For example, the following additives may be added to said elastomeric compositions: antioxidants, anti-aging agents, plasticizers, adhesives, antiozonants, modifying resins, fibers (aramid or of natural origin), or mixtures thereof.

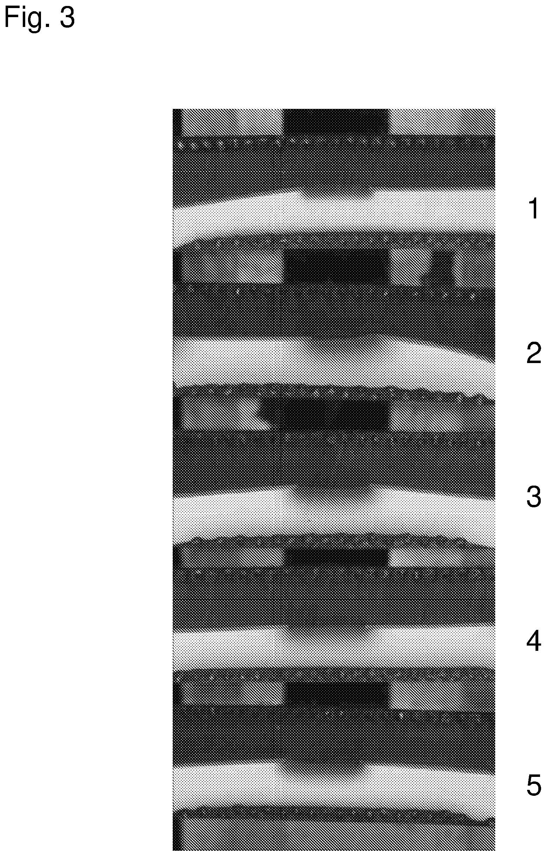

The protective elastomeric compositions used for making the coating layer do not contain the staining agents present in the elastomeric compositions used in the manufacture of the sidewall and of the other components of the tire, typically represented by antioxidants, antiozonants and waxes, or contain an amount of less than 0.1 phr. However, amounts in excess of 0.1 phr of such staining agents may result in the coating layer of the tire of the present invention by virtue of the partial migration of such staining agents from the sidewall of the tire, a migration which (as illustrated in figure 3) will be more evident in the coating layer portion immediately adjacent to the sidewall, while it will be zero or substantially null in the surface coating layer portion exposed to the atmosphere or in contact with the decorative elements.

The present invention will now be described hereinafter with reference to the accompanying drawings, provided only for illustrative and, therefore, non-limiting purposes, in which:
- figure 1 shows a cross half-section showing a tire for motor vehicle wheels according to an embodiment of the present invention,
- figure 2 shows a cross half-section showing a tire for motor vehicle wheels according to a different embodiment of the present invention, and
- figure 3 is a photograph of the samples 1 to 5 made as described in example 1.

### DETAILED DESCRIPTION OF THE INVENTION

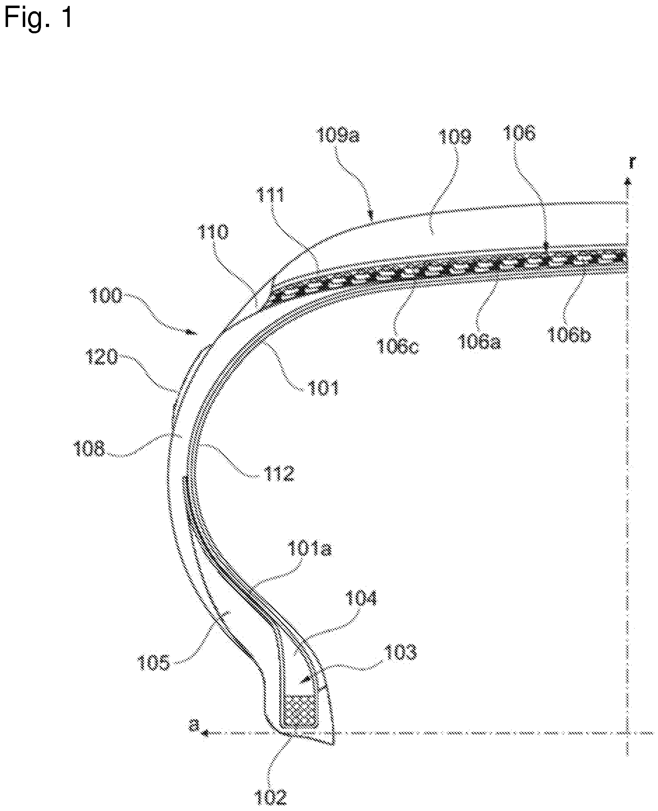

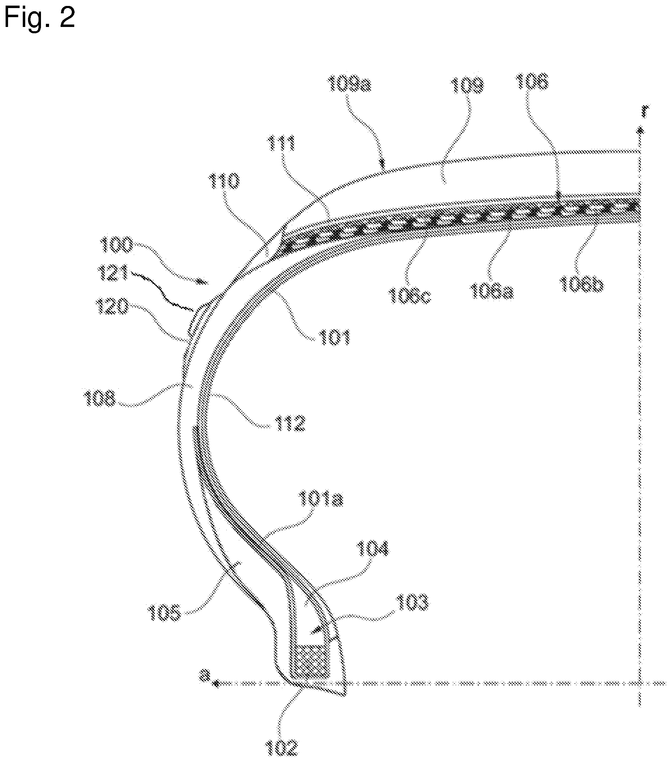

Figures 1 and 2 show a tire 100 having a sidewall 108 on which there is a protective coating layer 120 made with a protective elastomeric composition according to the present invention. In figure 1, the protective coating layer 120, possibly white or colored, can cover only a part of the sidewall 108 of the tire, as for example in the case where said protective coating layer, possibly white or colored, includes drawings, letters, logos, brands, decals applied on the sidewall of the tire. In an alternative embodiment, illustrated in figure 2, on the protective coating layer 120, generally black, decorative elements 121 are applied including drawings, letters, logos, brands, and decals.

In Figures 1 and 2, "a" indicates an axial direction and "r" indicates a radial direction.

With reference to figures 1 and 2, tire 100 for motor vehicle wheels comprises at least one carcass structure, comprising at least one carcass layer 101 having respectively opposite end flaps engaged with respective annular anchoring structures 102, referred to as bead cores, possibly associated to a bead filler 104. The tire area comprising the bead core 102 and the filler 104 forms a reinforcement annular structure 103, the so-called bead, intended for anchoring the tire onto a corresponding mounting rim, not shown.

The carcass structure is usually of radial type, i.e. the mutually parallel reinforcement elements of the at least one carcass layer 101 lie on planes comprising the rotational axis of the tire and substantially perpendicular to the equatorial plane of the tire.

Alternatively, tires (not shown) are provided with cross-ply carcass structures.

In such tires, the carcass structure may comprise at least a first and a second radially overlapping carcass ply, each made of elastomeric material and comprising a plurality of mutually reinforcing elements arranged parallel to one another.

The carcass plies are radially overlapped so that the reinforcing elements of a ply are inclined with respect to the reinforcing elements of the radially overlapped carcass ply and to the equatorial plane.

In the carcass ply/plies (both in radial tires and in cross-ply carcass tires), the reinforcing elements may consist of metal and/or textile cords, for example steel in the case of metal or rayon cords, lyocell, nylon, polyester (e.g. polyethylene naphthalate (PEN)) in the case of textile cords. Each annular reinforcing structure is associated to the carcass structure by folding back of the opposite lateral edges of the at least one carcass layer 101 around the annular anchoring structure 102 so as to form the so-called carcass flaps 101a as shown in Figures 1 and 2.

In one embodiment, the coupling between the carcass structure and the annular reinforcing structure can be provided by a second carcass layer (not shown in Figures 1 and 2) applied in an axially outer position with respect to the first carcass layer.

An anti-abrasive strip 105 is arranged in an outer position of each reinforcement annular structure 103. Preferably each anti-abrasive strip 105 is arranged at least in an axially outer position to the reinforcement annular structure 103 extending at least between the sidewall 108 and the portion radially below the reinforcement annular structure 103.

Preferably, the anti-abrasive strip 105 is arranged so as to enclose the reinforcement annular structure 103 along the axially inner and outer and radially lower areas of the reinforcement annular structure 103 so as to interpose between the latter and the wheel rim when the tire 100 is mounted to the rim.

In radial tires, the carcass structure is associated to a belt structure 106 comprising one or more belt layers 106a, 106b placed in radial superposition with respect to one another and with respect to the carcass layer, having typically metallic reinforcement cords. Such reinforcement cords may have crossed orientation with respect to a direction of circumferential development of tire 100. By "circumferential" direction it is meant a direction generally facing in the direction of rotation of the tire.

At least one zero-degree reinforcement layer 106c, commonly known as a "0° belt", may be applied in a radially outermost position to the belt layers 106a, 106b, which generally incorporates a plurality of reinforcement cords, typically textile cords, oriented in a substantially circumferential direction, thus forming an angle of a few degrees (such as an angle of between about 0° and 6°) with respect to the equatorial plane of the tire, and coated with an elastomeric material.

A tread band 109 of elastomeric blend is applied in a position radially outer to the belt structure 106.

In some embodiments (for example tires for motorcycle or scooter wheels), the belt structure may be absent.

In a radially outer position, the tread band 109 has a rolling surface 109a intended to come in contact with the ground. Circumferential grooves, which are connected by transverse notches (not shown in figures 1 and 2) so as to define a plurality of blocks of various shapes and sizes distributed over the rolling surface 109a, are generally made on this surface 109a, which for simplicity is represented smooth in Figures 1 and 2.

An under-layer 111 is arranged between the belt structure 106 and the tread band 109.

In the case of tubeless tires, a rubber layer 112, generally known as "liner", which provides the necessary impermeability to the inflation air of the tire, can also be provided in a radially inner position with respect to the carcass layer 101.

Moreover, respective sidewalls 108 are further applied in an axially outer position on the lateral surfaces of the carcass structure, each extending from one of the lateral edges of the tread 109 at the respective reinforcement annular structure 103.

A strip consisting of elastomeric material 110, commonly known as "mini-sidewall", can optionally be provided in the connecting zone between the sidewalls 108 and the tread band 109, this mini-sidewall being generally obtained by coextrusion with the tread band 109 and allowing an improvement of the mechanical interaction between the tread band 109 and the sidewalls 108. Preferably, the end portion of sidewall 108 directly covers the lateral edge of the tread band 109.

On the outer surface of at least one of the two sidewalls 108 (as illustrated in figure 1) at least one protective coating layer 120, possibly white or colored, made with the protective elastomeric composition according to the present invention, is applied, for example by means of co-vulcanization.

Alternatively, as shown in figure 2, at least one protective layer 120, generally black, made with the protective elastomeric composition according to the present invention, is applied on the outer surface of at least one of the two sidewalls 108, for example by means of co-vulcanization, on which the decorative elements 121 are subsequently applied.

The decorative elements 121 may be made of an elastomeric, plastic or elastoplastic polymeric material charged with coloring metal oxides or with organic dyes. The decorative elements may for example be made of polyurethane rubber.

According to an embodiment, the decorative elements 121 are made with a composition comprising EPDM rubber, halobutyl rubber, preferably chlorobutyl, and natural rubber. Particularly preferred is a composition comprising 1-10% by weight of EPDM rubber, 10-30% by weight of halobutyl rubber, preferably chlorobutyl, and 15-35% by weight of natural rubber with respect to the total weight of the composition, the remaining percentage comprising pigments and other additives, vulcanizing chemicals and adjuvants. The side of the decorative elements 121 intended for adhesion on the protective coating layer 120 may be coated with a heat-sensitive adhesive which can co-crosslink or can physically interact with the sidewall blend by fixing the decorative element to the sidewall itself.

The surface of the decorative element 121 exposed to the atmospheric agents may be advantageously coated with a protective film of transparent resin to maintain the aesthetic qualities of the decorative element for longer when the tire is used.

The building of the tire according to the present invention may be carried out according to the techniques and using the apparatuses that are known in the art, said building including the manufacture of the green tire, the manufacture of the raw protective layer, possibly white or colored, the molding, the vulcanization of the green tire and of the raw protective layer. For the purposes of the present invention, the application of the raw protective layer may take place on the green tire (and in this case the vulcanization of the raw protective layer will be simultaneous with that of the green tire) or on the finished tire (and in this case the vulcanization of the raw protective layer will be subsequent to that of the green tire).

In particular, the building of the tires 100 as described above may be carried out by assembling respective semi-finished products onto a forming drum, not shown, by at least one assembly device.

At least a part of the components intended to form the carcass structure of the tire may be built and/or assembled on the forming drum. More particularly, the forming drum is intended to first receive the possible liner, then the carcass structure. Subsequently, devices not shown coaxially engage one of the annular anchoring structures around each of the terminal flaps, and subsequently the sidewalls and the anti-abrasive strip are positioned.

Thereafter, an outer sleeve comprising the belt structure and the tread band may be positioned in a coaxially centered position around the cylindrical carcass sleeve and shape the carcass sleeve according to a toroidal configuration through a radial expansion of the carcass structure, so as to cause the application thereof against a radially inner surface of the outer sleeve.

After the building of the green tire, a molding and vulcanization treatment is generally carried out in order to determine the structural stabilization of the tire through cross-linking of the elastomeric blends , as well as to impart a desired tread pattern on the tread band and to impart any distinguishing graphic signs at the sidewalls.

The protective coating 120 may be affixed directly to the forming drum before assembling the sidewalls, or it may be positioned on the green tire prior to molding and vulcanization. The decorative elements 121 may be applied on the protective coating 120 of the finished tire downstream of the molding and vulcanization treatment.

Some tests performed on elastomeric materials made according to the invention are described below.

### EXAMPLE 1 - Migration

The protective elastomeric compositions 1-5 described in table 1 and the standard sidewall elastomeric composition F described in table 2 were separately prepared as follows. The amounts of the various components are given in phr, where the term phr means component parts per every hundred rubber parts.

**TABLE 1**

| | 1 (i) | 2 (i) | 3 (i) | 4 (i) | 5 (c) |
|---|---|---|---|---|---|
| NBR/PVC | 73.00 | 73.00 | 73.00 | 73.00 | 100.00 |
| BIIR | 27.00 | - | - | - | - |
| PBR | - | 27.00 | - | - | - |
| SBR | - | - | 27.00 | - | - |
| NR | - | - | - | 27.00 | - |
| Titanium oxide | 20.00 | 20.00 | 20.00 | 20.00 | 20.00 |
| Silica | 5.00 | 5.00 | 5.00 | 5.00 | 5.00 |
| BHT | 4.00 | 4.00 | 4.00 | 4.00 | 4.00 |
| Zinc octoate | 3.00 | 3.00 | 3.00 | 3.00 | 3.00 |
| Stearic acid | 1.00 | 1.00 | 1.00 | 1.00 | 1.00 |
| TESPT | 1.00 | 1.00 | 1.00 | 1.00 | 1.00 |
| TBBS | 3.00 | 3.00 | 3.00 | 3.00 | 3.00 |
| Sulfur | 1.00 | 1.00 | 1.00 | 1.00 | 1.00 |

| | | | | | |
|---|---|---|---|---|---|
| (i) invention (c) comparison | | | | | |

**TABLE 2**

| Composition | F |
|---|---|
| NR | 40.00 |
| PBR | 60.00 |
| CB | 60.00 |
| TDAE oil | 18.00 |
| Zinc oxide | 2.00 |
| Stearic acid | 1.00 |
| 6PPD | 3.00 |
| TMQ | 1.00 |
| Wax | 1.50 |
| TBBS | 2.50 |
| Sulfur | 1.00 |

| | |
|---|---|
| NBR/PVC: Sivic^{®} 702, acrylonitrile-butadiene rubber and vinyl chloride polymer (Sidiac, Touvre, France) BIIR: Bromobutyl 2030, bromo butyl rubber (Lanxess Deutschland GmbH, Germany) PBR: Europrene BR40, butadiene rubber (ENI Versalis SpA, San Donato Milanese, Italy) SBR: Europrene 1500, styrene-butadiene rubber (ENI Versalis SpA, San Donato Milanese, Italy) NR: STR20, natural rubber (Thaiteck Rubber, Thailand) CB: N550, carbon black, TDAE: Vivatec 500 (H & R Group, Hamburg, Germany) TESPT: bis(3-triethoxysilylpropyl)tetrasulfide, silane coupling agent (Degussa-Huls) BHT: 2,6-di-tert-butyl-4-methylphenol, antioxidant, TBBS: N-tert-butyl-2-benzothiazole sulfonamide, accelerant: (Lanxess Deutschland GmbH, Germany) 6PPD: Vulcanox^{®}4020, N-(1,3-dimethylbutyl)-N'-phenyl-p-phenylen-diamine (Lanxess Deutschland GmbH, Germany) TMQ: Vulcanox^{®} HS/LG, polymerized 2,2,4-trimethyl-1,2-dihydroquinoline (Lanxess Deutschland GmbH, Germany) | |

All the components, except for sulfur and the accelerant (TBBS) were mixed together in an internal mixer (model Pomini PL 1.6) for about 5 minutes (1^{st} step). As soon as the temperature reached 145±5°C the elastomeric composition was unloaded. Sulfur and the accelerant (TBBS) were then added and the mixing was carried out in an open cylinder mixer (2^{nd} step).

The protective elastomeric compositions 1-5 were laminated with the elastomeric composition of the sidewall, interposing a separation film between the two layers, and vulcanized at 170°C for 10 minutes to obtain specimens having the dimensions of 100 mm x 40 mm x 3 mm. The separation film had been previously partially cut to allow contact between the elastomeric compositions (1-5) and the elastomeric composition of the sidewall) for a surface area of about 5 cm².

The specimens were subjected to an accelerated aging test by exposing the samples to a xenon lamp in a Xenon test chamber Q-SUN XE-3-S from Q-Lab Corporation. The samples were exposed to a UV irradiation cycle (0.40 W/m², 340 nm) for 72 hours at 70°C to verify the migration of staining agents through the area in contact between the composition F and the protective compositions 1-5.

The results are summarized in the following table 3 and in figure 3, which shows the depth of migration of the staining agents within the layer made with each of the protective compositions 1-5. All specimens showed an effective hindering action to the migration of the staining agents. The best result was obtained with the specimen made using the composition 1 which showed a migration within the layer made with this composition of less than 1 mm.

**TABLE 3**

| | 1 | 2 | 3 | 4 | 5 |
|---|---|---|---|---|---|
| Minimum migration (µm) | 631 | 1090 | 990 | 806 | 907 |
| Maximum migration (µm) | 905 | 1405 | 1220 | 996 | 1103 |

### EXAMPLE 2 - Migration

The procedure of example 1 was repeated with the elastomeric compositions 6-11 described in the following table 4. The amounts of the various components are given in phr, where the term phr means component parts per every hundred rubber parts.

**TABLE 4**

| | 6 | 7 | 8 | 9 | 10 | 11 |
|---|---|---|---|---|---|---|
| NBR/PVC | 60.00 | 60.00 | 60.00 | 60.00 | 60.00 | 60.00 |
| BIIR | 40.00 | 40.00 | 40.00 | 40.00 | 40.00 | 40.00 |
| Titanium oxide | 33.00 | 33.00 | 33.00 | 33.00 | 33.00 | 33.00 |
| Silica | 10.00 | 10.00 | 10.00 | 10.00 | 10.00 | 10.00 |
| Oil | 8.00 | 8.00 | 8.00 | 8.00 | 8.00 | 8.00 |
| Ultramarine blue | 0.30 | 8.00 | - | - | - | 3.00 |
| Yellow | - | - | 8.00 | - | 7.80 | 5.00 |
| Red | - | - | - | 8.00 | 0.20 | - |
| BHT | 2.00 | 2.00 | 2.00 | 2.00 | 2.00 | 2.00 |
| Zinc octoate | 3.00 | 3.00 | 3.00 | 3.00 | 3.00 | 3.00 |
| Stearic acid | 1.00 | 1.00 | 1.00 | 1.00 | 1.00 | 1.00 |
| TESPT | 2.00 | 1.00 | 1.00 | 1.00 | 1.00 | 1.00 |
| TBBS | 3.00 | 3.00 | 3.00 | 3.00 | 3.00 | 3.00 |
| Sulfur | 1.00 | 1.00 | 1.00 | 1.00 | 1.00 | 1.00 |

The results are summarized in the following table 5. Also in this case, the table shows the effectiveness of the hindering action to the migration of the staining agents. The best results were obtained with the specimens of compositions 8 and 9 which showed a migration of less than 200 µm.

**TABLE 5**

| | 6 White | 7 Blue | 8 Yellow | 9 Red | 10 Orange | 11 Green |
|---|---|---|---|---|---|---|
| Minimum migration (µm) | 503 | 561 | n.d. | n.d. | 251 | 483 |
| Maximum migration (µm) | 569 | 850 | 198 | 197 | 315 | 660 |

| | | | | | | |
|---|---|---|---|---|---|---|
| n.d. = not determinable | | | | | | |

The results obtained in the tests of examples 1 and 2 summarized in tables 3 and 5 confirmed that the migration of staining agents contained in the standard sidewall elastomeric composition in the white or colored protective composition of the present invention is stopped before reaching the outer surface of the white or colored protective composition, thus leaving unaltered the aesthetic appearance of the white and/or colored layer made on the side of the tire.

### EXAMPLE 3 - OZONE TEST

The elastomeric compositions 12 and 13 described in table 6 were separately prepared as described in example 1. The amounts of the various components are given in phr, where the term phr means component parts per every hundred rubber parts.

**TABLE 6**

| | 12 | 13 |
|---|---|---|
| NBR/PVC | 70.00 | 70.00 |
| BIIR | 30.00 | 30.00 |
| CB | 40.00 | 40.00 |
| Zinc octoate | 3.00 | 3.00 |
| PEG | - | 3.00 |
| Wax | 3.00 | - |
| AO1 | 3.00 | 3.00 |
| AO2 | 3.00 | 3.00 |
| Stearic acid | 1.00 | 1.00 |
| PVI | 0.30 | 0.30 |
| TBBS | 3.00 | 3.00 |
| Sulfur | 1.00 | 1.00 |

| | | |
|---|---|---|
| NBR/PVC: Sivic^{®} 702, acrylonitrile-butadiene rubber and vinyl chloride polymer (Sidiac, Touvre, France) BIIR: Bromobutyl 2030, bromo butyl rubber (Lanxess Deutschland GmbH, Germany) CB: N550, carbon black (Cabot) AO1 Irganox 1520L, 4,6-bis[(octylthio)methyl]-o-cresol (BASF, Germany) AO2 Vulkazon AFS, 3,9-di-3-cyclohexen-1-yl-2,4,6,10-tetraoxaspiro[5.5]undecane (Lanxess Deutschland GmbH, Germany) | | |

The samples were then subjected to the dynamic ozone test, performed as follows, according to the ISO 1431-1 standard, to verify compliance with the necessary requirements despite the elimination of wax or other static polymeric protective agents.

The samples of the crosslinked elastomeric compositions 12 and 13 described above and a sample of the elastomeric sidewall composition F described in example 1 (cured at 170°C for 10 minutes), all having dimensions 50 mm x 10 mm x 2 mm, were positioned inside a glass bell in which ozonated air was conveyed [ozone concentration equal to 50 +/- 5 pphm (parts per hundred million)] and were dynamically and continuously subjected to traction from 0% to 20% of deformation. The test was performed at 50° +/- 2°C.

Starting from the first hour and then after every 2 hours (for a total time of 70 hours) under the conditions described above, the samples were examined with optical microscope (40X) to determine the presence of cracking.

The results of this test, summarized in the following table 7, were expressed on a rating scale that goes from 1 to 5, where 1 indicates no cracking visible with the optical microscope (40X) and 5 indicates cracking visible with the optical microscope (40X) and with the naked eye.

**TABLE 7**

| | 12 | 13 | F |
|---|---|---|---|
| Rating | 1 | 1 | 1 |

The test was repeated also on samples obtained by laminating a sample of the crosslinked elastomeric compositions 12 and 13 having a thickness of 0.6 mm on a sample of the elastomeric sidewall composition F described in example 1 having a thickness of 1.4 mm (vulcanized at 170°C for 10 minutes), obtaining samples having dimensions 50 mm x 10 mm x 2 mm.

The results of this test, expressed as in table 7, are summarized in the following table 8.

**TABLE 8**

| | 12+F | 13+F |
|---|---|---|
| Rating | 1 | 1 |

The results of tables 7 and 8 confirmed the good properties of ozone resistance of the elastomeric compositions of the present invention, both alone (table 7) and in contact with the standard elastomeric sidewall composition (table 8).

### EXAMPLE 4 - Tear-off test

The elastomeric compositions 1-5 described in table 1 and the formulations 12-13 described in table 6 were laminated with the elastomeric sidewall composition F described in table 2, and vulcanized at 170°C for 10 minutes to obtain specimens having dimensions of 100 mm x 40 mm x 3 mm.

Subsequently, the cross-linked specimens as described above were conditioned at room temperature (23°C ± 2°C) for at least 16 hours and were then subjected to the tear test using a Zwick 2005 dynamometer, applying a traction rate equal to 260 mm/min ± 20 mm/min. The measured tearing values, expressed in Newton (N), are shown in Table 9 and are each the average value calculated for 4 specimens.

**TABLE 9**

| | 1+F | 2+F | 3+F | 4+F | 5+F | 12+F | 13+F |
|---|---|---|---|---|---|---|---|
| Tearing force (N) | 32.90 | 30.60 | 37.70 | 38.00 | 45.10 | 67.90 | 69.50 |

The data in table 9 confirmed that the colored elastomeric compositions of the present invention showed a good or excellent adhesion to the standard sidewall composition.

## Claims

1. Tire comprising:
- a carcass structure comprising at least a carcass ply having opposite lateral edges associated to respective bead structure;
- a tread band applied in a radially outer position to said carcass structure;
- a pair of sidewalls laterally applied on opposite sides with respect to said carcass structure;
wherein at least one of said sidewalls is at least partially coated with at least one coating layer, possibly white or colored, obtained by cross-linking of a protective elastomeric composition, comprising:
• from 55 to 95 phr, preferably from 60 to 90 phr, of a mixture of a nitrile rubber and a vinyl chloride polymer,
• from 45 to 5 phr, preferably from 40 to 10 phr, of at least a diene and/or alpha-olefin elastomeric polymer,
• from 5 to 80 phr of at least one reinforcing filler, and
• optionally, from 0.1 to 10 phr of at least one coloring agent.

2. Tire according to claim 1, wherein said mixture of a nitrile rubber and a vinyl chloride polymer comprises from 50 to 80 parts by weight of nitrile rubber and from 20 to 50 parts by weight of vinyl chloride polymer with respect to 100 total parts by weight of nitrile rubber and vinyl chloride polymer.

3. Tire according to any one of claims from 1 to 2, wherein said nitrile rubber is a copolymer rubber obtained from an α,β-ethylenically unsaturated nitrile monomer selected from the group consisting of acrylonitrile and methacrylonitrile, and a diene monomer selected from the group consisting of 2-methyl-1,3-butadiene, 1,3-butadiene, 1,2-butadiene and 2-chloro-1,3-butadiene.

4. Tire according to claim 3, wherein said nitrile rubber is an acrylonitrile-butadiene rubber (NBR).

5. Tire according to any one of claims from 1 to 4, wherein said nitrile rubber comprises an amount of an α,β-ethylenically unsaturated nitrile monomer in the range comprised between 10% and 50%, preferably from 15 to 40% by weight, and more preferably from 20 to 30% by weight with respect to the total weight of the nitrile rubber.

6. Tire according to claim 1, wherein said vinyl chloride polymer is selected from the group consisting of polyvinyl chloride and copolymers of vinyl chloride with a monomer or monomers co-polymerizable with vinyl chloride,

7. Tire according to claim 6, wherein said vinyl chloride polymer is polyvinyl chloride (PVC), said polyvinyl chloride having a polymerization grade ranging from 550 and 2,500, preferably from 600 to 2,200, and more preferably from 650 and 2,000.

8. Tire according to any one of claims from 1 to 7, wherein said nitrile rubber has a (ML1 + 4, 100°C) Mooney viscosity of from 25 to 140, preferably from 35 to 100, and more preferably from 45 to 90.

9. Tire according to any one of claims from 1 to 8, wherein said mixture of a nitrile rubber and a vinyl chloride polymer comprises at least an additive selected from the group consisting of plasticizers, fillers, reinforcing agents, processing aids, anti-aging agents.

10. Tire according to any one of claims from 1 to 9, wherein said diene and/or alpha-olefin elastomeric polymer is selected from the group consisting of cis-1,4-polyisoprene (natural or synthetic rubber, preferably natural), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, ethylene/propylene (EPR) copolymers or ethylene/propylene/diene (EPDM) copolymers; polyisobutene; butyl rubbers; halobutyl rubbers, in particular chlorobutyl or bromobutyl rubbers; or mixture thereof.

11. Tire according to any one of claims from 1 to 10, wherein said reinforcing filler is selected from the group consisting of carbon black, silica, titanium dioxide, alumina, aluminosilicates, calcium carbonate, kaolin, talc, chalk or mixture thereof.

12. Tire according to claim 11, wherein said reinforcing filler is a white reinforcing filler selected from the group consisting of silica, alumina, titanium dioxide, aluminosilicates, bentonite, kaolin, talc, chalk or mixture thereof.

13. Tire according to claim 11, wherein said reinforcing filler is a dark reinforcing filler selected from the group consisting of carbon black.

14. Tire according to any one of claims from 1 to 13, wherein said coloring agent is selected from the group consisting of iron oxide, metal powders such as aluminum or copper powder, metal pastes such as aluminum pastes, pigments comprising organic components, pigments comprising inorganic components, pigments comprising fluorescent components, pigments comprising luminescent components, pigments absorbing ultraviolet rays, pigments comprising mineral components, oxides of amorphous glass, polyacrylates, metallic flakes, reflecting pigments, or mixture thereof.

15. Protective elastomeric composition comprising:
• from 55 to 95 phr, preferably from 60 to 90 phr, of a mixture of a nitrile rubber and a vinyl chloride polymer,
• from 45 to 5 phr, preferably from 40 to 10 phr, of at least a diene and/or alpha-olefin elastomeric polymer,
• from 5 to 80 phr of at least one reinforcing filler, and
• optionally, from 0.1 to 10 phr of at least one coloring agent.

## Patentansprüche

1. Reifen, umfassend:
- eine Karkassenstruktur mit mindestens einer Karkasslage, die gegenüberliegende Seitenkanten aufweist, welche mit der jeweiligen Wulststruktur verbunden sind;
- ein Laufflächenband, das radial außen bezüglich der Karkassenstruktur angebracht ist;
- ein Paar Seitenwände, die auf gegenüberliegenden Seiten in Bezug auf die Karkassenstruktur seitlich angebracht sind;
wobei mindestens eine der Seitenwände zumindest teilweise mit mindestens einer Überzugsschicht, gegebenenfalls weiß oder farbig, beschichtet ist, die durch Vernetzen einer schützenden Elastomerzusammensetzung erhalten wird, die Folgendes umfasst:
• 55 bis 95 phr, vorzugsweise 60 bis 90 phr, einer Mischung aus einem Nitrilkautschuk und einem Vinylchloridpolymer,
• 45 bis 5 phr, vorzugsweise 40 bis 10 phr, mindestens eines elastomeren Dien- und/oder alpha-Olefin-Polymers,
• 5 bis 80 phr mindestens eines verstärkenden Füllstoffs und
• optional 0,1 bis 10 phr mindestens eines Färbemittels.

2. Reifen nach Anspruch 1, wobei die Mischung aus einem Nitrilkautschuk und einem Vinylchloridpolymer 50 bis 80 Gewichtsteile Nitrilkautschuk und 20 bis 50 Gewichtsteile Vinylchloridpolymer, bezogen auf 100 Teile Gesamtgewicht Nitrilkautschuk und Vinylchloridpolymer, umfasst.

3. Reifen nach einem der Ansprüche 1 bis 2, wobei der Nitrilkautschuk ein Copolymerkautschuk ist, der aus einem α,β-ethylenisch ungesättigten Nitrilmonomer, das aus der Gruppe ausgewählt ist, die aus Acrylnitril und Methacrylnitril besteht, und einem Dienmonomer, das aus der Gruppe ausgewählt ist, die aus 2-Methyl-1,3-butadien, 1,3-Butadien, 1,2-Butadien und 2-Chlor-1,3-butadien besteht, erhalten wird.

4. Reifen nach Anspruch 3, wobei der Nitrilkautschuk ein Acrylnitril-Butadien-Kautschuk (NBR) ist.

5. Reifen nach einem der Ansprüche 1 bis 4, wobei der Nitrilkautschuk eine Menge eines α,β-ethylenisch ungesättigten Nitrilmonomers im Bereich zwischen 10 Gew.-% und 50 Gew.-%, vorzugsweise 15 bis 40 Gew.-% und stärker bevorzugt 20 bis 30 Gew.-%, bezogen auf das Gesamtgewicht des Nitrilkautschuks, umfasst.

6. Reifen nach Anspruch 1, wobei das Vinylchloridpolymer aus der Gruppe ausgewählt ist, die aus Polyvinylchlorid und Copolymeren von Vinylchlorid mit einem Monomer oder Monomeren, die mit Vinylchlorid copolymerisierbar sind, besteht.

7. Reifen nach Anspruch 6, wobei das Vinylchloridpolymer Polyvinylchlorid (PVC) ist, wobei das Polyvinylchlorid einen Polymerisationsgrad im Bereich von 550 bis 2.500, vorzugsweise von 600 bis 2.200 und stärker bevorzugt von 650 bis 2.000 aufweist.

8. Reifen nach einem der Ansprüche 1 bis 7, wobei der Nitrilkautschuk eine Mooney-Viskosität ML(1 + 4, 100°C) von 25 bis 140, vorzugsweise von 35 bis 100 und stärker bevorzugt von 45 bis 90 aufweist.

9. Reifen nach einem der Ansprüche 1 bis 8, wobei die Mischung aus einem Nitrilkautschuk und einem Vinylchloridpolymer mindestens einen Zusatzstoff umfasst, der aus der Gruppe ausgewählt ist, die aus Weichmachern, Füllstoffen, Verstärkungsmitteln, Verarbeitungshilfsstoffen und Alterungsschutzmitteln besteht.

10. Reifen nach einem der Ansprüche 1 bis 9, wobei das elastomere Dien- und/oder alpha-Olefin-Polymer aus der Gruppe ausgewählt ist, die aus cis-1,4-Polyisopren (Natur- oder Synthesekautschuk, vorzugsweise Naturkautschuk), 3,4-Polyisopren, Polybutadien (insbesondere Polybutadien mit hohem 1,4-cis-Anteil), wahlweise halogenierten Isopren/Isobuten-Copolymeren, 1,3-Butadien/Acrylnitril-Copolymeren, Styrol/1,3-Butadien-Copolymeren, Styrol/Isopren/1,3-Butadien-Copolymeren, Styrol/1,3-Butadien/Acrylnitril-Copolymeren, Ethylen/Propylen (EPR)-Copolymeren oder Ethylen/Propylen/Dien (EPDM)-Copolymeren; Polyisobuten; Butylkautschuken; Halobutylkautschuken, insbesondere Chlorbutyl- oder Brombutylkautschuken; oder Mischungen daraus, besteht.

11. Reifen nach einem der Ansprüche 1 bis 10, wobei der verstärkende Füllstoff aus der Gruppe ausgewählt ist, die aus Industrieruß, Kieselsäure, Titandioxid, Aluminiumoxid, Aluminiumsilicaten, Calciumcarbonat, Kaolin, Talkum, Kreide oder einer Mischung daraus besteht.

12. Reifen nach Anspruch 11, wobei der verstärkende Füllstoff ein weißer verstärkender Füllstoff ist, der aus der Gruppe ausgewählt ist, die aus Kieselsäure, Aluminiumoxid, Titandioxid, Aluminiumsilicaten, Bentonit, Kaolin, Talkum, Kreide oder einer Mischung daraus besteht.

13. Reifen nach Anspruch 11, wobei der verstärkende Füllstoff ein dunkler verstärkender Füllstoff ist, der aus der Gruppe ausgewählt ist, die aus Industrieruß besteht.

14. Reifen nach einem der Ansprüche 1 bis 13, wobei das Färbemittel aus der Gruppe ausgewählt ist, die aus Eisenoxid, Metallpulvern wie Aluminium- oder Kupferpulver, Metallpasten wie Aluminiumpasten, organische Bestandteile umfassenden Pigmenten, anorganische Bestandteile umfassenden Pigmenten, fluoreszierende Bestandteile umfassenden Pigmenten, lumineszierende Bestandteile umfassenden Pigmenten, ultraviolette Strahlen absorbierenden Pigmenten, mineralische Bestandteile umfassenden Pigmenten, Oxiden von amorphem Glas, Polyacrylaten, Metallflocken, reflektierenden Pigmenten oder einer Mischung daraus besteht.

15. Schützende Elastomerzusammensetzung, umfassend:
• 55 bis 95 phr, vorzugsweise 60 bis 90 phr, einer Mischung aus einem Nitrilkautschuk und einem Vinylchloridpolymer,
• 45 bis 5 phr, vorzugsweise 40 bis 10 phr, mindestens eines elastomeren Dien- und/oder alpha-Olefin-Polymers,
• 5 bis 80 phr mindestens eines verstärkenden Füllstoffs und
• optional 0,1 bis 10 phr mindestens eines Färbemittels.

## Revendications

1. Pneu comprenant :
- une structure de carcasse comprenant au moins un pli de carcasse ayant des bords latéraux opposés associés à une structure de talon respective ;
- une bande de roulement appliquée dans une position radialement extérieure à ladite structure de carcasse ;
- une paire de flancs appliqués latéralement sur des côtés opposés par rapport à ladite structure de carcasse ;
dans lequel au moins un desdits flancs est au moins partiellement revêtu d'au moins une couche de revêtement, éventuellement blanche ou colorée, obtenue par réticulation d'une composition élastomère protectrice, comprenant :
• 55 à 95 phr, de préférence 60 à 90 phr, d'un mélange d'un caoutchouc nitrile et d'un polymère de chlorure de vinyle,
• 45 à 5 phr, de préférence 40 à 10 phr, d'au moins un polymère élastomère diénique et/ou alpha-oléfinique,
• 5 à 80 phr d'au moins une charge renforçante, et
• éventuellement, 0,1 à 10 phr d'au moins un agent colorant.

2. Pneu selon la revendication 1, dans lequel ledit mélange d'un caoutchouc nitrile et d'un polymère de chlorure de vinyle comprend 50 à 80 parties en poids de caoutchouc nitrile et 20 à 50 parties en poids de polymère de chlorure de vinyle par rapport à 100 parties totales en poids de caoutchouc nitrile et de polymère de chlorure de vinyle.

3. Pneu selon l'une quelconque des revendications 1 et 2, dans lequel ledit caoutchouc nitrile est un caoutchouc copolymère obtenu à partir d'un monomère nitrile à insaturation α,β-éthylénique choisi dans le groupe constitué par l'acrylonitrile et le méthacrylonitrile, et d'un monomère diène choisi dans le groupe constitué par le 2-méthyl-1,3-butadiène, le 1,3-butadiène, le 1,2-butadiène et le 2-chloro-1,3-butadiène.

4. Pneu selon la revendication 3, dans lequel ledit caoutchouc nitrile est un caoutchouc acrylonitrile-butadiène (NBR).

5. Pneu selon l'une quelconque des revendications 1 à 4, dans lequel ledit caoutchouc nitrile comprend une quantité d'un monomère nitrile à insaturation α,β-éthylénique se trouvant dans la plage comprise entre 10% et 50%, de préférence entre 15 et 40% en poids, et plus préférablement entre 20 et 30% en poids par rapport au poids total du caoutchouc nitrile.

6. Pneu selon la revendication 1, dans lequel ledit polymère de chlorure de vinyle est choisi dans le groupe constitué par le polychlorure de vinyle et des copolymères de chlorure de vinyle avec un ou des monomère (s) copolymérisable(s) avec le chlorure de vinyle.

7. Pneu selon la revendication 6, dans lequel ledit polymère de chlorure de vinyle est le polychlorure de vinyle (PVC), ledit polychlorure de vinyle ayant une qualité de polymérisation allant de 550 à 2500, de préférence de 600 à 2200, et plus préférablement de 650 à 2000.

8. Pneu selon l'une quelconque des revendications 1 à 7, dans lequel ledit caoutchouc nitrile a une viscosité Mooney (ML1 + 4, 100°C) allant de 25 à 140, de préférence de 35 à 100, et plus préférablement de 45 à 90.

9. Pneu selon l'une quelconque des revendications 1 à 8, dans lequel ledit mélange d'un caoutchouc nitrile et d'un polymère de chlorure de vinyle comprend au moins un additif choisi dans le groupe constitué par des plastifiants, des charges, des agents de renforcement, des auxiliaires de traitement, des agents anti-vieillissement.

10. Pneu selon l'une quelconque des revendications 1 à 9, dans lequel ledit polymère élastomère diénique et/ou alpha-oléfinique est choisi dans le groupe constitué par le cis-1,4-polyisoprène (caoutchouc naturel ou synthétique, de préférence naturel), le 3,4-polyisoprène, le polybutadiène (en particulier le polybutadiène à forte teneur en 1,4-cis), des copolymères isoprène/isobutène éventuellement halogénés, des copolymères 1,3-butadiène/acrylonitrile, des copolymères styrène/1,3-butadiène, des copolymères styrène/isoprène/1,3-butadiène, des copolymères styrène/1,3-butadiène/acrylonitrile, des copolymères éthylène/propylène (EPR) ou des copolymères éthylène/propylène/diène (EPDM) ; le polyisobutène ; les caoutchoucs butyle ; les caoutchoucs halogénobutyles, en particulier les caoutchoucs chlorobutyles ou bromobutyles ; ou un mélange de ceux-ci.

11. Pneu selon l'une quelconque des revendications 1 à 10, dans lequel ladite charge renforçante est choisie dans le groupe constitué par le noir de carbone, la silice, le dioxyde de titane, l'alumine, les aluminosilicates, le carbonate de calcium, le kaolin, le talc, la craie ou un mélange de ceux-ci.

12. Pneu selon la revendication 11, dans lequel ladite charge renforçante est une charge renforçante blanche choisie dans le groupe constitué par la silice, l'alumine, le dioxyde de titane, les aluminosilicates, la bentonite, le kaolin, le talc, la craie ou un mélange de ceux-ci.

13. Pneu selon la revendication 11, dans lequel ladite charge renforçante est une charge renforçante foncée choisie dans le groupe constitué par le noir de carbone.

14. Pneu selon l'une quelconque des revendications 1 à 13, dans lequel ledit agent colorant est choisi dans le groupe constitué par l'oxyde de fer, des poudres métalliques telles que les poudres d'aluminium ou de cuivre, des pâtes métalliques telles que les pâtes d'aluminium, des pigments comprenant des composants organiques, des pigments comprenant des composants inorganiques, des pigments comprenant des composants fluorescents, des pigments comprenant des composants luminescents, des pigments absorbant les rayons ultraviolets, des pigments comprenant des composants minéraux, des oxydes de verre amorphe, des polyacrylates, des paillettes métalliques, des pigments réfléchissants, ou un mélange de ceux-ci.

15. Composition élastomère protectrice comprenant :
• 55 à 95 phr, de préférence 60 à 90 phr, d'un mélange d'un caoutchouc nitrile et d'un polymère de chlorure de vinyle,
• 45 à 5 phr, de préférence 40 à 10 phr, d'au moins un polymère élastomère diénique et/ou alpha-oléfinique,
• 5 à 80 phr d'au moins une charge renforçante, et
• éventuellement, 0,1 à 10 phr d'au moins un agent colorant.
